# EUROPEAN PATENT APPLICATION

(11) **EP 3 287 204 A1**
(43) Date of publication of application: **28.02.2018**
(21) Application number: 16185657.0
(22) Date of filing: 25.08.2016
(51) Int. Cl.: B09C 1/00, B03B 9/00, C02F 1/00

(54) **MODULAR SYSTEM FOR REMEDIATION TREATMENT OF CONTAMINATED SUBTERRANEAN SUBSTRATE AND RELATED METHOD**

(71) Applicant: Doranova Oy, 37470 Vesilanti (FI)
(72) Inventor: Mattila, Perttu, 36110 Ruutana (FI); Myllymäki, Mikko, 37420 Vesilahti (FI); Mäkelä, Pasi, 37470 Vesilahti (FI); Laitinen, Jarno, 33300 Tampere (FI)
(74) Representative: Heinonen & Co

(57) **Abstract**

A system (10) for remediation treatment of contaminated subterranean substrate within a predetermined, spatially restricted site and related method are provided. The system (10) comprises a number of interconnected modular units (11a, 11b, 11c, 11d, 11e, 11f, 11g, 11h, 11i), each modular unit being a separate, independent entity configured to perform a distinctive, predetermined function related to remediation treatment of contaminated subterranean substrate. The number and the position order of said modular units within the system (10) are adjustable.

## Description

### FIELD OF THE INVENTION

The present invention generally relates to systems and methods for restoration of polluted subterranean substrates. In particular, the present invention concerns a modular system for remediation treatment of contaminated subterranean substrate within a predetermined, spatially limited land area and related method.

### BACKGROUND

Contamination of soil and groundwater originating from industrial and agricultural activities, as well as from consumption practices, has become a serious problem worldwide. Only in Europe the number of potential contaminated sites has been estimated to constitute more than 2,5 million, with size of affected site varying from 1 km² to more than 1000 km². Apart from penetrating into underlying groundwaters/aquifers and evaporating into the air, contaminants may tightly bind to soil, thus affecting its acidity (pH), moisture and temperature levels and causing modifications in soil texture, mineralogical content and amount of organic matter therewithin. It is therefore clear that presence of contaminants, including volatile and semi-volatile organic compounds, petroleum hydrocarbons, pesticides, corrosives, inorganic compounds such as lead, chromium, cadmium, arsenic and mercury, and radioactive compounds, such as tritium, for example, in subterranean substrates at concentrations above the background level induce health hazards and lead to environmental threats.

Effective remediation techniques thus play a key role in cleaning and reclamation of polluted subterranean substrates. Remediation is a process of cleaning up a contaminated site that involves a variety of techniques aiming at reducing or eliminating contamination from soil and groundwater. Remediation is commonly performed either through excavation and physical transfer of large volumes of bulk soil or other base material away from the polluted site, or through cleaning up contaminated areas directly on-site with or without excavation (the latter being referred to as in-situ). Bulk soil transfer related methods, apart from being expensive, do not solve the contamination problem, but relocate it to elsewhere. Moreover, such methods can be performed solely on open terrain. Site-specific methods, in particular, in-situ methods are cost-effective, non-destructive and environmentally friendly. Additionally, in-situ methods offer a full recovery solution with regard to a treated area. A variety of conventional in-situ procedures exists, including so called pump and treat, soil washing, air stripping, chemical immobilization, bioremediation, and others.

However, most deteriorated lands contain accumulations of different contaminants. Reclamation of such site by existing in-situ methods may be severely hindered due to the following reasons. Thus, complete recovery of the site often requires utilization of several conventional in-situ procedures applied consecutively or simultaneously, wherein each procedure naturally requires device installations of its own that may not be necessarily available from the same manufacturer/contractor. Furthermore, dependent on the nature of pollutants, utilization of various chemicals and/or microorganisms may be required for remediation, even in case the same in-situ procedure has been exploited. Thereby, complete cleanup of lands from multiple contaminants and mixtures thereof turns out to be a long-lasting, labour intensive and, in terms of final costs, comparable to the abovementioned soil transfer techniques (aka expensive) process.

In this regard, update on the field of technology related to site-specific remediation of contaminated lands is still desirable, in view of addressing the continuously rising problem of cleaning up the areas containing different contaminants and mixtures thereof.

### SUMMARY OF THE INVENTION

An objective of the present invention is to at least alleviate each of the problems arising from the limitations and disadvantages of the related art. The objective is achieved by various embodiments of a modular system for remediation treatment of contaminated subterranean substrate within a particular remediation site, related method and use thereof. Thereby, in one aspect of the invention a system for remediation treatment is provided, according to what is defined in the independent claim 1.

In one preferred embodiment the system comprises a number of interconnected modular units, wherein each modular unit is a separate, independent entity configured to perform a distinctive, predetermined function related to remediation treatment of contaminated subterranean substrate within the remediation site, and wherein the number and the position order of said modular units within the system are adjustable.

The arrangement of the modular units within the system is preferably sequential. In some embodiment, position of each modular unit within the system is exchangeable. In some further embodiment, each modular unit within the system is replaceable by another modular unit configured to perform the same or distinct function with respect to the function performed by the modular unit being replaced.

In some embodiment, each modular unit of the system is configured as a device for one of the extraction, phase separation, adsorption, biodegradation, filtration, pumping, gas stripping, electrokinetic separation, and injection.

In some preferred embodiment the system is preferably configured for remediation treatment of subterranean substrate contaminated by a mixture of contaminants different in view of elemental composition thereof. In some embodiment the system is further configured for removal, breakdown and/or neutralization of contaminants accumulated in the subterranean substrate in any one of the solid, liquid and gaseous forms.

The system preferably comprises an at least one control terminal for reading, monitoring and coordinating the operational state and function of each modular unit in real-time. In some embodiment the system further comprises a housing configured to provide an individual access to each modular unit.

In some embodiment the system further comprises connection means to a pipework, that mediates connection of said system to at least a number of extraction wells configured to deliver contaminant-containing fluid from subterranean substrate into the system, and a number of injection wells configured to deliver an essentially contaminant-free fluid from the system into subterranean substrate within the remediation site.

In another aspect a method for remediation treatment of contaminated subterranean substrate within a particular remediation site is provided, according to what is defined in independent claim 11.

In still further aspect use of the system according to some previous aspect is provided for remediation treatment of contaminated subterranean substrate within a particular remediation site, according to what is defined in independent claim 15.

The utility of the present invention arises from a variety of reasons depending on each particular embodiment thereof.

At first, the invention provides a modular platform solution for various site-specific remediation treatments of subterranean substrates, in which the modules are rendered for executing predetermined, distinctive functions aiming at restoration of contaminated subterranean substrates, said modules being exchangeable, replaceable and adjustable in view of the number and position order within the platform. Such a solution offers an exceptional flexibility in view of realization of various existing remediation technologies, in particular, in-situ remediation technologies, directly on-site and within a single device/system. Furthermore, by combining the existing technologies, such as oil vapor extraction, chemical oxidation, soil flushing, pump-and-treat, bioremediation, air sparging, bioventing, and electrokinetic separation, for example, within a single device/system, implementation of tailored remediation strategies is made possible in reliable, time- and cost-effective manner. Naturally, maintenance and repair of individual modules provided by the platform solution of the present invention is easier and cheaper in comparison with that of "solid" remediation platforms.

Secondly, the modular platform solution disclosed hereby allows for simultaneous removal, breakdown and/or neutralization of a variety of contaminants that differ by elemental composition thereof and present in the subterranean substrate in the form of mixtures. The modular platform of the invention can be further configured for treating the aforesaid contaminants and mixtures thereof accumulated in subsurface in any one of the solid (e.g. particulates), liquid (e.g. dissolved contaminants) and gaseous (e.g. interstitial gas) forms.

The modular platform solution disclosed hereby is easily scalable and can be adjusted for treating affected sites of different size and level of contamination. Thus, the invention allows for restoration of relatively small sites contaminated by individual components, as well as vast areas having subsurface accumulations of different contaminants and mixtures thereof, being otherwise difficult or impossible to handle in-situ. Since the present invention is particularly rendered for in-situ applications, it is particularly feasible for sites, whose excavation is not desired and/or impossible.

The expression "a number of" is used in the context of the present document to indicate any positive integer starting from one (1). The expression "a plurality of" refers hereby to any positive integer starting from two (2), e.g. to two, three, or four.

The expression "remediation treatment" is used hereby to indicate a set of actions directed to any of removal, breakdown and/or neutralization of contaminants present in environmental media and generally having negative impact on human health and environment. The expression "subterranean substrate" is utilized hereby to indicate any kind of substrate or medium, e.g. solid, liquid and gaseous, originally occurring beneath the land surface.

Different embodiments of the present invention will become apparent by consideration of the detailed description and accompanying drawings.

### BRIEF DESCRIPTION OF THE DRAWINGS

Fig. 1 is a perspective view of a modular system 10 for remediation treatment of contaminated subterranean substrate within a particular remediation site, according to some embodiment.
Fig. 2 schematically illustrates an exemplary arrangement of the modular units in the system 10.
Figs. 3A and 3B schematically illustrate various embodiments of a method, according to some aspect.

### DETAILED DESCRIPTION OF THE DRAWINGS

Detailed embodiments of the present invention are disclosed herein with the reference to accompanying drawings. The same reference characters are used throughout the drawings to refer to same members. Following citations are used for the members:
10 - a system for remediation treatment;
11a, 11b, 11c, 11d, 11e, 11f, 11g, 11h, 11i - modular units provided within the system 10;
12 - representative configuration of a device constituting the exemplary modular unit;
13 - a housing;
14 - a control terminal;
15, 15a - connection ports;
21, 21a - a pipework;
22, 22a - an extraction well and an injection well, accordingly;
23 - essentially contaminant-free fluid delivered to a remediation site;
23a - nutrients, remedial and cleansing agents delivered to the remediation site;
31 - an additional water source;
41 - a remediation site;
42 - contaminant-containing fluid/groundwater.

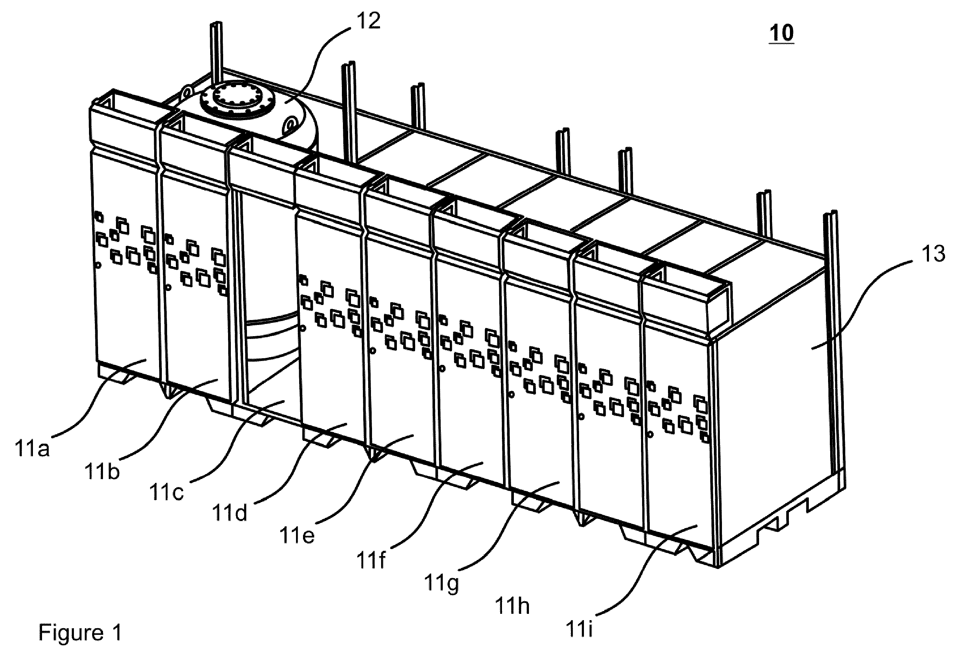

Fig. 1 illustrates at 10 the concept underlying various embodiments of a modular system 10 in accordance with some aspect of the present invention. The system 10 is advantageously configured for accomplishing remediation treatment of contaminated subterranean substrate within a predetermined, spatially limited land area, further referred to as a "remediation site". The system 10 is preferably configured for in-situ remediation treatment technology. The system 10 can be further configured for on-site and off-site remediation treatments.

The term "in-situ" is utilized hereby to indicate that remediation treatment proceeds directly at the remediation site without excavation and transfer of bulk material therefrom. The terms "on-site" and "off-site" refer, in turn, to remediation technologies that imply or at least do not exclude dredging/excavation procedures of contaminated subterranean substrate prior to the actual remediation process (e.g. digging up a landfill site intended for reclamation). Further difference lies in the fact that, while in-situ and on-site remediation processes proceed directly at the contaminated site (thereby the remediation site spatially corresponds to a contaminated land area), the off-site remediation process implies treating contaminated subterranean substrate brought to the remediation site from elsewhere. In off-site treatment the remediation site is thus spatially separated from the actual location of contamination.

Hence, the in-situ treatment can be applied to both open terrain and built-up areas, whereas the on-site and off-site treatments may be preferably applicable to open terrain.

The system 10 is preferably configured for remediation treatment of subterranean substrates, in particular of soil, groundwater, and underground accumulations of gaseous media. As mentioned above, the term "subterranean substrate" is applicable to the substrates or media originally occurring beneath the land surface and thus including the ones that have been excavated and/or transferred to the remediation site from elsewhere, as implied by on-site and/or off-site remediation techniques, for example. The term "soil" is interpreted hereby in its broadest sense to include various types of soils, rock, sand etc., whereas the term "groundwater" is referred to any water lied beneath the land surface, such as being found in aquifers, spaces between grains of soil and rock, etc.

The system 10 is further applicable for removal of contaminants from underground accumulations of gaseous media found in natural hollows and caves, as well as in man-made underground structures, such as subways, vaults, etc. Potential applications include removal of poisonous gases, e.g. radon, from said underground structures.

Provision of the system 10 is particularly suitable for remediation treatment comprising removal, breakdown and/or neutralization of contaminants accumulated in subterranean substrate in any one of the solid, liquid and gaseous forms. The system 10 may thus be configured for removal of particulates, dissolved contaminants and interstitial gas (pore gas) stored in spaces between grains of soil and reservoir rock.

The system 10 comprises a number of interconnected modular units, whose number and position order/arrangement within the system can be adjusted dependent on selected remediation strategy and taking into consideration such factors as geolocation and size of the affected area, soil type and extent of contamination therewithin, as well as composition and concentrations of contaminants. Fig. 1 shows the embodiment comprising nine modular units or modules, referred to by the reference numerals 11a, 11b, 11c, 11d, 11c, 11f, 11g, 11h and 11i (11a-11i). Each modular unit 11a-11i constitutes a separate, independent entity and is configured to perform a distinctive, predetermined function related to remediation treatment of contaminated subterranean substrate. Each module 11a-11i is advantageously configured as a self-contained entity that contains within itself all parts necessary for completeness of the predetermined function assigned thereto.

Hereby, each modular unit 11a-11i within the system 10 is configured as a device 12 configured to perform a function of its own. In some preferred embodiments selection of functions performed by modules 11a-11i include, but is not limited to extraction, phase separation, adsorption, degradation, such as biodegradation, filtration, pumping, gas stripping, including air striping, electrokinetic separation, and injection. The representative device 12 shown on Fig. 1 is configured as a reactor, however, for the artisan it is clear that the above listed applications require devices designed and implemented accordingly, such as pumps, filters, gas stripers, various separators, injectors and extractors, etc.

At its simplest embodiment the system 10 may thus comprise two modular units, e.g. for gas extraction and gas adsorption, however, the more complicated is the affected area and remediation plan, the more demands are lied onto remediation service providers/contractors, accordingly. The number of the modular units is preferably adjustable (i.e. not constant). Thus, for difficult areas the system 10 may include up to 15-20 modules, however, most sites can be handled by 7-13 modules.

The system 10 advantageously comprises a housing 13 configured such, as to provide an individual access to each modular unit 11a-11i, via the side doors, for examples (Fig. 1). The housing 13 may be further divided into compartments such, that the number of compartments corresponds to the number of modules. Alternatively, the housing 13 may have a common interior.

Arrangement of the interconnected modular units 11a-11i within the system 10 is preferably sequential, wherein the modular units 11a-11i are positioned next to each other in one row. In preferred configuration position of each module 11a-11i within the system 10 is exchangeable. Thus, positions of some modules, such as 11e and 11g, for example, can be exchanged within the system 10 (Fig. 1). Additionally, the system 10 allows for temporary switching-off/disabling some of the modules 11a-11i in case functions performed thereby are not required. Such option provides additional flexibility to a purchaser and/or an end user of the system 10 with fixed configuration. Still, the system 10 can be designed and assembled in a highly customized manner to satisfy the customer's needs and demands.

Each modular unit 11a-11i is further configured replaceable by another modular unit 11a-11i, hereby referred to as a "replacement module". The replacement module may be configured to perform the same function as the one being replaced, as in case of replacing a broken module, for example. In such a case the exemplary module 11d will be replaced by a corresponding replacement module 11d. Alternatively, the replacement module may be configured to perform different function with regards to the one being replaced. In such a case the exemplary module 11d will be replaced by the exemplary replacement module 11e, for example. This option is particularly convenient when in the course of remediation treatment some new factors are discovered to be indispensably dealt with. In similar manner, new modules can be added or removed during the remediation process.

The above described exchangeability and replaceability of individual modules within the system 10 can be attained by provision of standardized interconnectors for all modular units 11a-11i or, alternatively, by provision of appropriate adaptor solutions.

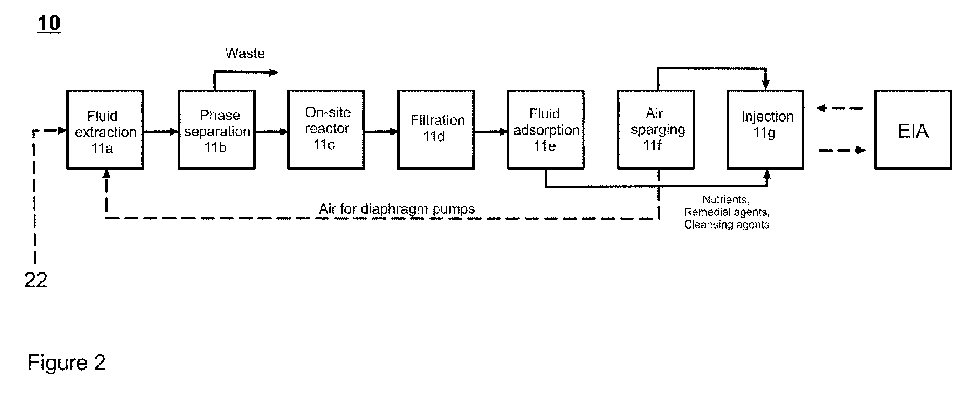

Fig. 2 illustrates an exemplary arrangement of the modular units within the system 10, wherein individual modules 11a, 11b, 11c, 11d, 11e, 11h and 11g are assigned a predetermined, distinctive function. In a given example the module 11a is configured for extraction or recovery of contaminant-containing fluid, e.g. groundwater, from the well 22. In other embodiments the module 11a may be configured for gas extraction, for example, as shown further below. From the module 11a contaminant-containing fluid, hereby groundwater, is guided towards the module 11b configured as a phase separation device to remove accumulations of non-aqueous phase liquids (NAPLs). Module 11b of Fig. 2 can be configured for separation of NAPLs with a density lower than water (light non-aqueous phase liquids, LNAPLs), such as fuels (gasoline, kerosene, fuel oil, jet and diesel fuels), or NAPLs with a density higher than water (dense non-aqueous phase liquids, DNAPLs), such as organic solvents (trichloroethylene, trichloroethane, carbon tetrachloride, toluene, turpentine), organic wood preservatives, coal tars and pesticides. At this stage oil- and solvent waste is removed from the system 10 for further disposal. Exiting the module 11b fluid enters the module 11c configured as an on-site reactor device, such as a bioreactor. Bioreactors exploit microbial degradation processes for treatment of gaseous, liquid or solid wastes. The system 10 may comprise any suitable type of bioreactor operating under aerobic or anaerobic conditions and including, but not limited to fluidized bed reactors, rotating contractor type reactors and fixed bed reactors. Similarly, utilization of any suitable microorganisms/bacteria is possible.

Partly clarified fluid exits the bioreactor 11c and is further passed through a pre-filtration module 11d, advantageously configured as a pressure filter operating under elevated pressure. The embodiment of Fig. 2 further comprises a fluid adsorption module 11c, disposed next to the filter 11d. Herein, the module 11d is implemented as a liquid adsorption module; however, whether the system 10 is tailored for handling gaseous medium, the module 11d may be implemented as a gas adsorption module. Adsorption is the process in which a compound moves from a liquid or gaseous phase onto the surface of the solid and adheres thereto. The module 11e may be configured as a carbon adsorption system, for example, in which contaminant-containing fluid (hereby, groundwater) is pumped through one or more vessels containing activated carbon to which dissolved organic contaminants adsorb. Carbon adsorption is suitable for removal of wide variety of contaminants from liquid and gaseous media, such as benzene, toluene, ethylbenzene, xylenes, and chlorinated solvents. Adsorption module 11e assures complete removal of particulates from the treated medium.

Rectified medium, referred hereby as an essentially contaminant-free fluid, may be next delivered into subterranean substrate via an injection module 11g. By the expression "essentially contaminant-free fluid" we refer to a fluid having maximum-contaminant level within health- and environmental standards. In preferred embodiment said essentially contaminant-free fluid is further supplied with nutrients and remedial agents indispensable for complete restoration of the remediation site. Nutrients and remedial agents may be admixed into the essentially contaminant-free fluid on its way to the module 11g from an additional manifold connected to a chemical- and nutrient container, for example (not shown). Advantageously, nutrients and remedial agents may be dosed to and admixed with the essentially contaminant-free fluid directly in the module 11g.

In embodiment of Fig. 2 the injection module 11g is configured for in-situ injection. In-situ injection normally requires provision, within the remediation site, of a number of injection wells with appropriate top-down installations, injection pumps, etc. Apart from delivering nutrients and remedial agents into subterranean substrate, in-situ injection additionally allows for introducing cleansing agents thereto to destroy contaminants in place. Thus, by injecting chemical oxidants, such as peroxide, ozone and permanganate, rapid and complete destruction of organic solvents and others contaminants of concern may be achieved with high rates (more than 90 percent).

The system 10 of Fig. 2 further comprises an air sparging module 11f configured to deliver pressurized gas, such as air or oxygen, into the subterranean substrate, thus promoting mass transfer of oxygen into the groundwater that, in turn, causes removal and/or degradation of contaminants dissolved in groundwater, present as non-aqueous phase liquid, or adsorbed into the soil matrix. Mechanisms include air stripping of volatile organic compounds (VOCs), volatilization of trapped and adsorbed phase contaminants and aerobic biodegradation. Oxygen delivery into soil enhances the activity of indigenous bacteria and stimulates natural in-situ biodegradation. The technology is called bioventing and is particularly useful in biodegradation of adsorbed fuel residuals, but is also applicable in degradation of VOCs.

Chemicals, injected into soil and aquifer via the injection module 11g, and air/oxygen delivered thereto via the air sparging module 11f effectively decompose the contaminants of concern, present underground, to water and carbon dioxide. Air sparging module 11f is also used for pumping air to diaphragm pumps (e.g. air-operated diaphragm pumps) utilized in the liquid extraction module 11a.

Additionally or alternatively the system 10 may comprise a biosparging module (not shown) for injecting into the subsurface gases other than air and oxygen, e.g. methane, carbon dioxide or nitrous oxide.

By provision of the modular system 10, in which each module 11a-11i is rendered for completion of a predetermined, distinctive function, remediation of the subterranean substrate contaminated by a mixture of contaminants, different in view of elemental composition thereof, can be achieved. Hence, the system 10 can be successfully utilized for restoration of sites contaminated with a variety of acids, alcohols, aldehydes and ketones, ammonia, creosote, chlorophenols, crude oil, petroleum/fuel hydrocarbons, glucols, phenols, polyaromatic hydrocarbons, chlorinated solvents, surfactants, as well as cyanides, explosives, polychlorinated biphenyls, pesticides, herbicides, fungicides, tars, timber treatments, and mixtures thereof Moreover, the system 10 can be configured for removal, breakdown and/or neutralization of aforesaid contaminants accumulated in subterranean substrate in any one of the solid (e.g. particulates), liquid (e.g. dissolved contaminants) and gaseous (e.g. interstitial gas) forms.

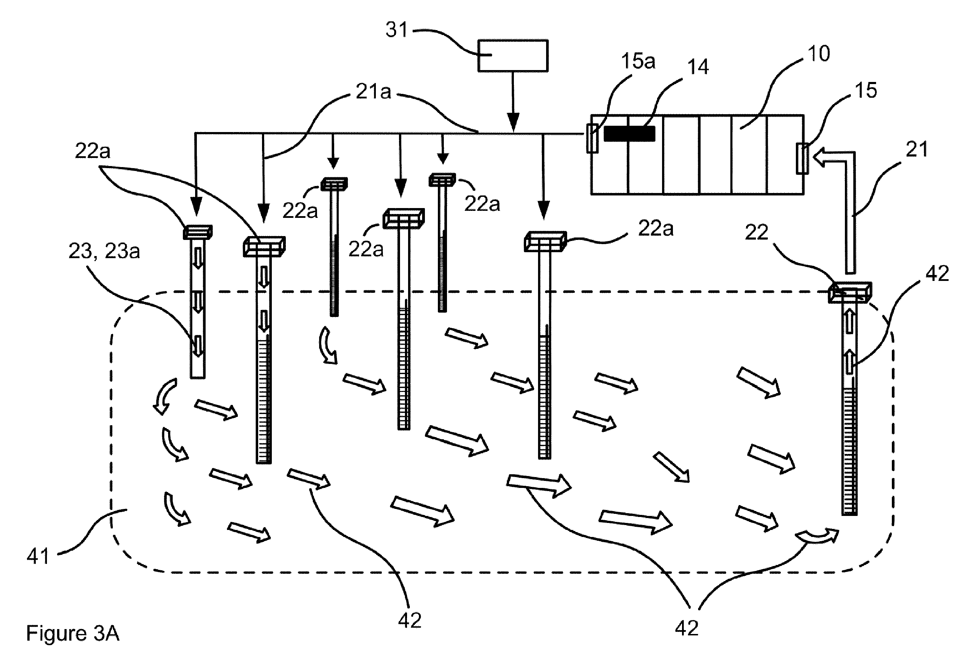

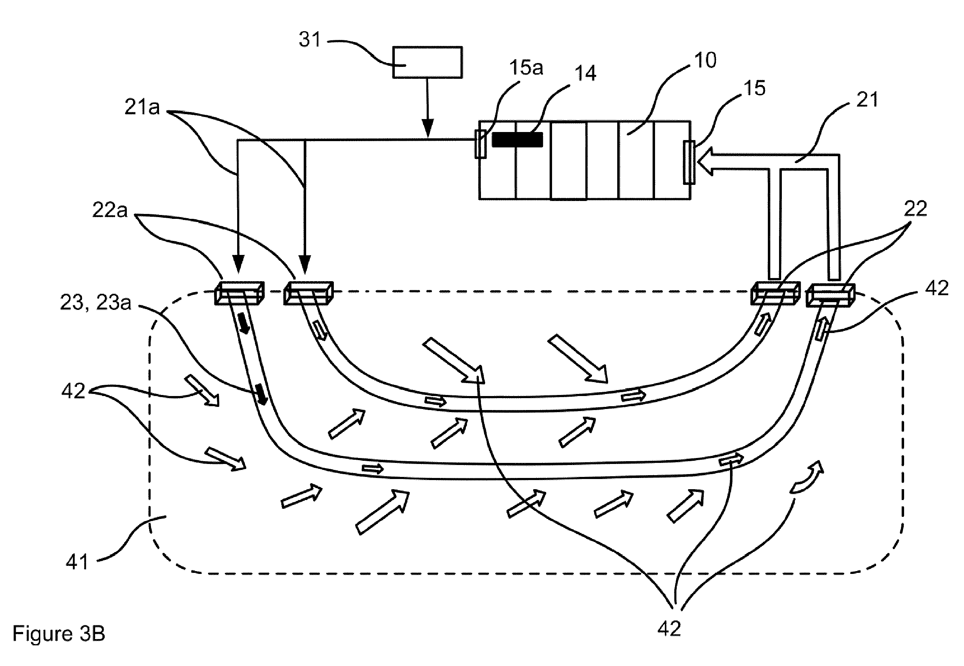

In one preferred embodiment the system further comprises an at least one control terminal 14 (Figs. 3A, 3B) for reading and monitoring operational state of each modular unit 11a-11i in real-time. The control terminal 14 is preferably equipped with a user interface, such as a graphical user interface in the form of a display screen, preferably a touchscreen. Control terminals 14 may be provided locally for each modular unit 11a-11i. Alternatively, the system 10 may comprise a centralized control terminal 14, thereupon collection and transmitting of data between the individual modules 11a-11i and the centralized control terminal 14 will be implemented via a number of sensors and transceivers (not shown).

Independent on distributed or centralized localization of control terminal(s), each module 11a-11i further comprises a number of sensors (not shown) for real-time detection and measurement of a variety of magnitudes, such as pressure, temperature, concentration, flow speed, filling level, and the like. Information obtained from said sensors is automatically transferred to the control terminal 14 (local or centralized) and can be used to monitor operational state of each module 11a-11i and to identify potentially anomalous or unexpected behavior within any of said modules. Such semi-automatic configuration is hereby preferred; however, fully automated solutions enabling, apart from reading and monitoring, also altering operational state of the modular units, are not excluded. Alteration of operational state includes activating/deactivating individual modules, modifying system parameters (pressure, temperature, reagent concentration) and/or supply/withdraw of additional materials and reactive substances with regards to each module. The control terminal 14 may be further connected, in wired or wireless manner, to a central control terminal/processor (not shown) provided as a local- or remote computer, for example, including, but not limited to PC, portable or tablet computer, mobile phone, smart phone, PDA and the like.

In preferred configurations the control terminal 14 and/or the central control terminal/processor (not shown) are further configured to coordinate the operational state and the function of each module 11a-11i within the system 10 so as to assure cooperative performance of said modules during executing a remediation treatment program. Coordination is preferably performed in real-time. By the "remediation treatment program" we refer hereby to a series of actions sequentially performed by each modular unit 11a-11i within the system 10 in a predetermined period of time. The above description of Fig. 2 concerns execution of a single remediation treatment program, for example. The program is normally repeated several times until restoration of the affected site is completed.

Real-time data collected from each module 11a-11i via control terminal(s) 14 is further utilized for evaluation and optimization of remediation treatment programs and/or related strategies pre-established for each affected area within an Environmental Impact Assessment (EIA) project (Fig. 2). Continuous feedback obtainable from the system 10 in real-time thus allows for more efficient administration of remediation projects in-hand.

Additionally, the system 10 comprises an at least ON/OFF switch for manual triggering the switch operation. Preferably, each module 11a-11a within the system is equipped with the ON/OFF switch.

The system 10 may be further configured for continuous- or batch operation.

Further exemplary configurations of the system 10 are presented in the Table 1.

**Table 1. Examples of various configurations of the system 10.**

| Module Nº | Configuration, Nº | | | | | |
|---|---|---|---|---|---|---|
| | I | II | III | IV | V | VI |
| 1 | Liquid Extraction | Liquid Extraction | Gas Extraction | Liquid Extraction | Liquid Extraction | Liquid Extraction |
| 2 | Gas Extraction | Pre-Filtration | Gas adsorption | NAPL Separation | NAPL Separation | Gas Extraction |
| 3 | NAPL Separation | Liquid adsorption | | Feed Pump | Feed Pump | Pre-Filtration |
| 4 | Feed Pump | Air Sparging | | Pre-Filtration | Pre-Filtration | Gas Striping |
| 5 | Pre-Filtration | In-situ Injection | | Liquid adsorption | Liquid adsorption | Feed Pump |
| 6 | Gas Stripping | | | Air Sparging | | Liquid adsorption |
| 7 | Feed Pump | | | In-situ Injection | | Gas adsorption |
| 8 | Liquid adsorption | | | | | In-situ Injection |
| 9 | Membrane Filtration | | | | | |
| 10 | On-site reactor | | | | | |
| 11 | Gas adsorption | | | | | |
| 12 | Air Sparging | | | | | |
| 13 | Feed Pump | | | | | |
| 14 | In-situ Injection | | | | | |
| 15 | Electrokinetic Separation | | | | | |
| Environmental Impact Assessment | | | | | | |

In addition to the modules described above, the exemplary embodiments of Table 1 involve the modular units exploiting technologies for processing and treating underground gaseous media, such as interstitial gas stored in spaces between grains of soil and reservoir rock. The system 10 may be further adjusted to handle gaseous accumulations occurring in natural hollows and caves, as well as in man-made underground structures, such as subways, vaults, cellars, etc.

Electrokinetic in-situ treatment is a process in which electrical field is created in soil substrate by applying current (commonly a low-voltage direct current) to electrodes placed in the soil. The technology allows for mobilization and concentration of both organic and inorganic contaminants at the electrodes and subsequent extraction thereof from the soil by conventional methods. Presence of the electrokinetic separation module within the system 10 (e.g. Configuration I, Table 1) naturally requires provision of aforesaid electrodes placed into soil at the remediation site.

Presence of feed pumps in some individual modules indicates provision of various devices therewithin that require pumping of media, such as reactors, filters, extraction systems, and the like.

Due to exchangeability, replaceability, as well as quantitative and functional diversity of the modular units 11a-11i, the system 10 provides an extremely flexible tool for implementing about any kind of existing remediation technology, in particular, in-situ and/or on-site remediation technologies, such as soil vapor extraction, chemical oxidation, soil flushing, pump-and-treat, bioremediation, air sparging, bioventing, and electrokinetic separation, for example. Additionally, the system 10 allows, by combining the aforesaid technologies, to design and put into practice highly customized, end-user developed remediation strategies in reliable and cost-effective manner. It must be understood, that the modules 11a, 11b, 11c, 11d, 11e, 11f, 11g, 11h and 11i (11a-11i) shown on Figs. 1 and 2 in terms of the number, layout and functionalities thereof serve merely illustrative purpose, and are not intended to limit the invention in any way. Since in-situ remediation technologies continue to develop, the modules 11a-11i may be configured to acquire practically any function desired and necessary for the particular contaminated site 41.

Figs. 3A and 3B schematically illustrate exemplary embodiments of a method, according to another aspect of the invention, for remediation of contaminated subterranean substrate within a predetermined, spatially restricted site 41. Fig. 3A thus describes in-situ remediation of contaminated groundwater within the site 41 via a number of vertical wells by exploiting the principles of pump and treat technology, wherein contaminant-containing fluid 42 (groundwater) is extracted from the subsurface by pumping. Fig. 3B describes an on-site remediation of contaminated subterranean substrate proceeding via a number of horizontal interconnected wells. While the arrangement/method of Fig. 3A are suitable for remediation of whatsoever sites (open terrain and/or built-up), the same of Fig. 3B is particularly suitable for reclamation of open terrain sites that have possibly undergone dredging/excavation procedures prior the actual remediation, such as landfill sites, for example.

The methods of Figs. 3A and 3B start at provision of the system 10 in an appropriate configuration and connecting thereof to a number of extraction (recovery) wells 22 and injection wells 22a disposed within the site 41. Configuration of the system 10, selection and connection of the modules 11a-11i therewithin, as well as the number and parameters of the wells 22, 22a are preferably determined based on the results of preliminary site diagnostics and analysis in view of geolocation, soil composition and nature of contaminants. Normally a remediation strategy is created for each site/project, based on which strategy a remediation treatment program for the system 10 can be generated.

Thus, Fig. 3A shows a number of extraction and injection wells 22, 22a provided as separate, individual bores with appropriate installations; whereas Fig. 3B shows the wells 22, 22a configured as horizontal directional bores interconnected therebetween. Indeed, a setup indispensable for proper functioning of horizontal wells (in terms of extraction, injection functions, etc.), is pre-installed into bore infrastructure in an appropriate manner. Additionally or alternatively, the arrangement of Fig. 3B may have horizontal wells 22, 22a with dead ends, disposed at different underground levels (not shown).

The system 10 may be on-site assembled from the individual modules based on the aforesaid remediation strategy, or the system in a standard (fixed) configuration may be utilized, as far as it contains all modules necessary for executing the remediation treatment program. With reference to Fig. 3A, provision of the one extraction well 22 and six injection wells 22a within the remediation site 41 is shown; however, the number of wells 22, 22a on the site 41 may generally vary. Drilling of the wells 22, 22a and provision thereof with appropriate top-down installations is done beforehand. Well depth may vary between remediation sites, as well as within a single site 41. Normally, well depth varies from 2 to 15 meters; still, solutions with deeper wells are not excluded when necessary. Distance between the injection wells and/or between the extraction wells is within the range of 0,5 - 25 meters, dependent on a variety of parameters, such as type of soil, presence of groundwater, flow and/or speed thereof, contamination level, etc.

The system 10 is thus connected to the wells 22, 22a via a pipework 21, 21a (Figs. 3A, 3B). The system 10 preferably comprises connection means 15, 15a, implemented as a set of suitable connection ports and adaptors, to connect with said pipework 21, 21a. The connection means 15 thus mediates connection of the system 10, via the pipework 21, to the extraction well 22 (Fig. 3A) or a number of extractions wells 22 (Fig. 3B); and the connection means 15a mediates connection of the system 10 via the pipework 21a to a number of injection wells 22a (Figs. 3A, 3B).

The system 10 connected to the wells 22, 22a via the pipework 21, 21a may use water obtained directly from the remediation site 41 that eliminates the need in municipal water manifolds. However, in case the site 41 already contains a municipal water manifold, it could be joined to the pipework 21a to be used as an additional water source 31.

Additionally to aforesaid extraction- and injection wells 22, 22a, also a number of monitoring wells may be drilled (not shown).

Once the on-site installation is ready to use, the remediation treatment program is initiated. With reference to Figs. 3A and 3B, the remediation treatment program may start at extracting contaminant-containing fluid 42 (hereby, groundwater), e.g. by pumping, from the subterranean substrate into the system 10 via the extraction well(s) 22. Once the contaminant-containing fluid 42 has been received into the system 10 it is subjected to a series of treatments by being consequently passed through a number of interconnected modular units 11a, 11b, 11c, 11d, 11e, 11f, 11g, 11h, 11i within the system 10. Thus, fluid 42 may be passed through all modules or only through selected modules, dependent on remediation strategy and remediation treatment program as disclosed above. In a latter case it is clear that inactive modules must be disabled during execution of a particular remediation treatment program and the active ones must be provided with appropriate connectors/adaptors. The system 10 is thus configured to purify fluid 42, by removal, breakdown and/or neutralization of contaminants present therein, to an extent, when maximum-contaminant level in said fluid meets or does not exceed health- and environmental standards.

As mentioned above, the remediation treatment program is advantageously executed in the system 10 via a series of actions preformed sequentially by the number of interconnected modular units 11a, 11b, 11c, 11d, 11e, 11f, 11g, 11h, 11i (all or selected), wherein each unit is configured to perform a distinctive, predetermined function related to disposal of contaminants from the fluid 42. Completion of the program yields an essentially contaminant-free fluid 23, referred to as a fluid having maximum-contaminant level within health- and environmental standards. In the example of Fig. 2 the fluid 23 has been obtained in the fluid adsorption module 11e.

Referring back to Figs. 3A, 3B fluid 23 is next delivered from the system 10 into the subterranean substrate via a number of injection wells 22a. The methods of Fig. 3A, 3B thus allow for continuous fluid recycling. In one preferred embodiment, prior to delivery of fluid 23 into the subterranean substrate, said fluid can be admixed with nutrients, remedial and cleansing agents 23a, for said compounds to be delivered into subsurface. Admixing of aforesaid compounds into fluid 23 may be done in batches or in a continuous manner.

When executing the remediation treatment program in the system 10 it is advantageous that at least pressure and flow speed are monitored for all active modular units 11a-11i via the control terminal(s) 14.

In another preferred embodiment the remediation treatment program starts at delivery of nutrients, remedial agents and cleansing agents 23a from the system 10 into the subterranean substrate via the injection wells 22a prior to processing of contaminant-containing fluid 42. Such implementation of the method is particularly applicable if/when no fluid (e.g. water or groundwater) is available or not intended to introduce into the process prior to injection of the aforesaid reagents. In this embodiment the contaminant-containing fluid, subsequently received from the subterranean substrate into the system 10 via the extraction wells 22, has already reacted to some extent with pre-injected compounds. Once the fluid 42 has been received into the system, it is purified in the same manner as described for the previous embodiment. The essentially contaminant-free fluid 23 obtained hereby is further delivered from the system 10 into the subterranean substrate via the injection well(s) 22, said fluid 23 being optionally admixed with additional portions of nutrients, remedial agents and cleansing agents 23a.

Indeed, the number, layout and functions of each modular unit 11a-11i within the system 10 may vary dependent on remediation method selected and other factors generally prescribed by a remediation strategy and a remediation treatment program.

By repeating the above described program for a predetermined number of times and/or during a predetermined period of time, complete or at least satisfactory restoration of the remediation site 41 can be achieved. While complete restoration implies disposal of 99,9% of contaminants present in the subterranean substrate within the remediation site, satisfactory restoration implies adjusting the maximum-contaminant level to values that comply with aforementioned heath- and environmental standards. Naturally, remediation time schedules may be adjusted based on real-time monitoring results obtained from the system 10.

In particular the in-situ method disclosed hereby (Fig. 3A) advantageously proceeds without excavation and transfer of bulk material from the remediation site. Thereby, said method is particularly suitable for remediation of built-up sites, such as residential, recreational, industrial and/or commercial areas with any type of built structures and/or buildings on the surface thereof. The method is either suitable for remediation of empty sites comprising no buildings.

It is clear to a person skilled in the art that with the advancement of technology the basic ideas of the present invention are intended to cover various modifications and equivalent arrangements included in the spirit and the scope thereof. The invention and its embodiments are thus not limited to the examples described above; instead they may generally vary within the scope of the appended claims.

## Claims

1. A system (10) for remediation treatment of contaminated subterranean substrate within a remediation site (41), the system (10) comprises a number of interconnected modular units (11a, 11b, 11c, 11d, 11e, 11f, 11g, 11h, 11i), wherein each modular unit is a separate, independent entity configured to perform a distinctive, predetermined function related to remediation treatment of contaminated subterranean substrate within the remediation site (41), and wherein the number and the position order of said modular units within the system (10) are adjustable.

2. The system (10) of claim 1, wherein the modular units (11a, 11b, 11c, 11d, 11e, 11f, 11g, 11h, 11i) are arranged sequentially.

3. The system (10) of any of the claims 1 and 2, wherein position of each modular unit (11a, 11b, 11c, 11d, 11e, 11f, 11g, 11h, 11i) within the system (10) is exchangeable.

4. The system (10) of any of the preceding claims, wherein each modular unit (11a, 11b, 11c, 11d, 11e, 11f, 11g, 11h, 11i) within the system (10) is replaceable by another modular unit configured to perform the same or distinct function with respect to the function performed by the modular unit being replaced.

5. The system (10) of any of the preceding claims, wherein each modular unit (11a, 11b, 11c, 11d, 11e, 11f, 11g, 11h, 11i) within the system (10) is configured as a device (12) for one of the extraction, phase separation, adsorption, biodegradation, filtration, pumping, gas stripping, electrokinetic separation, and injection.

6. The system (10) of any of the preceding claims, configured, in view of any of the number, position order and functions of the modular units (11a, 11b, 11c, 11d, 11e, 11f, 11g, 11h, 11i) therewithin, for remediation treatment of subterranean substrate contaminated by a mixture of contaminants different in view of elemental composition thereof.

7. The system (10) of any of the preceding claims, configured, in view of any of the number, position order and functions of the modular units (11a, 11b, 11c, 11d, 11e, 11f, 11g, 11h, 11i) therewithin, for removal, breakdown and/or neutralization of contaminants accumulated in the subterranean substrate in any one of the solid, liquid and gaseous forms.

8. The system (10) of any of the preceding claims, further comprising an at least one control terminal (14) for reading, monitoring and coordinating the operational state and function of each modular unit (11a, 11b, 11c, 11d, 11c, 11f, 11g, 11h, 11i) in real-time.

9. The system (10) of any of the preceding claims, further comprising a housing (13), configured to provide an individual access to each modular unit (11a, 11b, 11c, 11d, 11e, 11f, 11g, 11h, 11i).

10. The system (10) of any of the preceding claims, further comprising connection means (15, 15a) to a pipework (21, 21a) that mediates connection of the system (10) to at least a number of extraction wells (22) configured to deliver contaminant-containing fluid (42) from the subterranean substrate into the system (10), and a number of injection wells (22a) configured to deliver an essentially contaminant-free fluid (23) from the system (10) into the subterranean substrate within the remediation site (41).

11. A method for remediation treatment of contaminated subterranean substrate within a remediation site (41), comprising:
a) provision of the system (10) as defined in claims 1-10 and connecting thereof to a number of wells (22, 22a), disposed within the remediation site (41), via the pipework (21, 21a);
b) delivery of nutrients, remedial agents and cleansing agents (23a) from the system (10) into the subterranean substrate via a number of injection wells (22a);
c) receiving contaminant-containing fluid (42) from the subterranean substrate into the system (10) via a number of extraction wells (22);
d) disposal of contaminants present in the fluid (42) received at step (c) by passing said fluid (42) through a number of interconnected modular units (11a, 11b, 11c, 11d, 11e, 11f, 11g, 11h, 11i) within the system (10) to obtain essentially contaminant-free fluid (23),
wherein step (d) is executed via sequential actions of the number of modular units (11a, 11b, 11c, 11d, 11e, 11f, 11g, 11h, 11i), each unit being configured to perform a distinctive, predetermined function related to disposal of contaminants present in the fluid (42), the number and the position order of said modular units within the system (10) being adjustable.

12. The method of claim 11, further comprising delivery of said essentially contaminant-free fluid (23) from the system (10) into the subterranean substrate via a number of injection wells (22a).

13. The method of claim 12, wherein said essentially contaminant-free fluid (23) delivered from the system (10) into the subterranean substrate via a number of injection wells (22a) is further admixed with nutrients, remedial agents and cleansing agents (23a).

14. The method of any of the claims 11-13 carried out without excavation and transfer of bulk material from the remediation site (41).

15. Use of the system (10) as defined in claims 1-10 for remediation treatment of contaminated subterranean substrate within the remediation site (41), wherein subterranean substrate is any one of soil, groundwater, and underground accumulations of gaseous media.
